# EUROPÄISCHE PATENTSCHRIFT

(11) **EP 3 613 659 B1**
(45) Veröffentlichungstag und Bekanntmachung des Hinweises auf die Patenterteilung: **15.12.2021**
(21) Anmeldenummer: 19192476.0
(22) Anmeldetag: 20.08.2019
(51) Int. Cl.: B62D 35/02, B62D 35/00, B62D 37/02

(54) **KRAFTFAHRZEUG-LUFTLEITVORRICHTUNG UND KRAFTFAHRZEUG**
MOTOR VEHICLE AND MOTOR VEHICLE AIR CONVEYING DEVICE
DISPOSITIF DE CONDUIT D'AIR DE VÉHICULE AUTOMOBILE ET VÉHICULE AUTOMOBILE

(30) Priorität: 22.08.2018 DE 202018104838 U
(43) Veröffentlichungstag der Anmeldung: 26.02.2020
(73) Patentinhaber: Betterflow GmbH, 52072 Aachen (DE)
(72) Erfinder: Buffo, Rainer, 50937 Köln (DE); Martin, Ingo, 52072 Aachen (DE)
(74) Vertreter: Andrejewski - Honke Patent- und Rechtsanwälte Partnerschaft mbB

(56) Entgegenhaltungen:
- EP-A1- 1 870 322
- WO-A2-02/051688
- DE-A1-102016 001 517
- FR-A1- 2 902 744
- US-A1- 2011 095 563
- US-A1- 2017 349 224

## Beschreibung

Die Erfindung betrifft eine Kraftfahrzeug-Luftleitvorrichtung, insbesondere für einen Lastkraftwagen, vorzugsweise für einen Trailer eines Lastkraftwagens, mit zumindest einem flexiblen, flächigen Kraftfahrzeug-Luftleitelement, wobei das Luftleitelement an dem Fahrzeug anschließbar ist. Die Erfindung betrifft fernerhin ein Kraftfahrzeug - insbesondere einen Lastkraftwagen - mit zumindest einer erfindungsgemäßen Luftleitvorrichtung. Dabei ist die Luftleitvorrichtung insbesondere an dem Trailer eines Lastkraftwagens befestigt. - Im Fahrbetrieb eines Kraftfahrzeuges - vor allem eines Lastkraftwagens - entstehen in verschiedenen Bereichen bzw. an unterschiedlichen Komponenten des Kraftfahrzeuges bzw. des Lastkraftwagens unerwünschte Luftverwirbelungen, die den Luftwiderstand des Fahrzeuges in nachteilhafter Weise erhöhen. In der Regel versucht man, den Einfluss derartiger Luftverwirbelungen möglichst gering zu halten und den Luftwiderstand bzw. Strömungswiderstand eines Fahrzeuges zu vermindern.

In der Praxis wurden bereits verschiedene Maßnahmen zwecks Verminderung des Luftwiderstandes von Fahrzeugen realisiert. Bekannt sind Luftleitelemente, die bestimmte Fahrzeugkomponenten aerodynamisch abdecken bzw. verkleiden und dabei der im Fahrbetrieb entstehenden Luftströmung eine Vorzugsrichtung vorgeben. Viele dieser bekannten Luftleitvorrichtungen lassen jedoch im Hinblick auf den erzielten Luftleiteffekt zu wünschen übrig. Vor allem für den Unterbodenbereich eines Fahrzeuges und insbesondere eines Lastkraftwagens konnten bislang kaum überzeugende Lösungen verwirklicht werden. Deshalb besteht insbesondere für Luftleitmaßnahmen im unteren Bereich eines Fahrzeuges Verbesserungsbedarf.

Die US 2011/095563 A1 offenbart eine Kraftfahrzeug-Luftleitvorrichtung, mit zumindest einem flexiblen flächigen Kraftfahrzeug-Luftleitelement, wobei das Luftleitelement einen Teil der Fläche des Unterbodens des Fahrzeuges abdeckt, wobei das flächige Luftleitelement in Längsrichtung des Fahrzeuges verspannt bzw. gespannt ist und wobei die Verspannung bzw. die Spannkraft zur Verspannung des Luftleitelementes einstellbar ist, wobei eine Spannvorrichtung zur Einstellung der Verspannung des Luftleitelementes vorhanden ist und an einem Längsende des flexiblen Luftleitelementes angeordnet ist. Dieses Luftleitelement ist an einer sich quer zur Fahrtrichtung bzw. quer zur Längsrichtung des Unterbodens erstreckenden Spannstange fixiert.

Der Erfindung liegt das technische Problem zugrunde, eine Kraftfahrzeug-Luftleitvorrichtung der eingangs genannten Art anzugeben, mit der der Luftwiderstand eines Kraftfahrzeuges, insbesondere eines Lastkraftwagens vor allem im unteren Bereich des Fahrzeuges bzw. im Unterbodenbereich des Fahrzeuges effektiv und funktionssicher reduziert werden kann. Dabei soll die Luftleitvorrichtung nichtsdestoweniger wenig aufwendig und kostengünstig verwirklichbar sein. Der Erfindung liegt fernerhin das technische Problem zugrunde, ein Kraftfahrzeug, insbesondere einen Lastkraftwagen, mit einer solchen Luftleitvorrichtung anzugeben.

Zur Lösung dieses technischen Problems lehrt die Erfindung eine Kraftfahrzeug-Luftleitvorrichtung, insbesondere für einen Lastkraftwagen - vorzugsweise für einen Trailer eines Lastkraftwagens -, mit zumindest einem flexiblen, flächigen Kraftfahrzeug-Luftleitelement, wobei das Luftleitelement an dem Fahrzeug mit der Maßgabe anschließbar ist, das es zumindest einen Teil der Fläche des Unterbodens des Fahrzeuges abdeckt, vorzugsweise zumindest 10 %, zweckmäßigerweise zumindest 15 %, bevorzugt zumindest 20 %, sehr bevorzugt zumindest 30 % und besonders bevorzugt zumindest 40 % der Fläche des Unterbodens flächig abdeckt und wobei das flächige Luftleitelement zumindest eine Fahrzeugachse zumindest teilweise abdeckt, wobei sich das flächige Luftleitelement über zumindest 40 %, vorzugsweise über zumindest 45 % der Länge des Unterbodens des Fahrzeuges, insbesondere der Länge des Unterbodens des Trailers erstreckt, wobei das flächige Luftleitelement in Längsrichtung des Fahrzeuges, insbesondere des Trailers verspannt bzw. gespannt ist und wobei die Verspannung bzw. die Spannkraft zur Verspannung des Luftleitelementes einstellbar ist. - Es empfiehlt sich, dass das flächige Luftleitelement zumindest 45 %, bevorzugt zumindest 50 % und sehr bevorzugt zumindest 55 % der Fläche des Unterbodens des Fahrzeuges flächig abdeckt.

Eine besonders bewährte Ausführungsform der Erfindung ist dadurch gekennzeichnet, dass das flexible, flächige Luftleitelement als flexible Plane bzw. als flexible Folie ausgebildet ist. Zweckmäßigerweise handelt es sich um eine faserverstärkte und/oder um eine metalldrahtverstärkte Folie bzw. Plane. Das flexible, flächige Luftleitelement - insbesondere die Plane bzw. Folie - kann auch dehnbar und insbesondere elastisch dehnbar ausgebildet sein. - Das flexible, flächige Luftleitelement hat den Vorteil, dass es sich um am Unterboden des Fahrzeuges angeschlossene Bodenkomponenten im Fahrbetrieb problemlos anlegt bzw. anschmiegt. Eine empfohlene Ausführungsform der Erfindung zeichnet sich dadurch aus, dass das flächige Luftleitelement bzw. die flexible Plane/Folie zumindest eine glatte unprofilierte Oberfläche aufweist. Dadurch wird es möglich, dass von der Oberfläche des Luftleitelementes Schmutz sowie Eis, Schnee und dergleichen abgleiten bzw. abfließen kann.

Es liegt im Rahmen der Erfindung, dass das flexible flächige Luftleitelement ein einziges, durchgehendes, zwischenraumfreies, sich in Längsrichtung des Unterbodens erstreckendes Luftleitelement ist. Zwischenraumfrei meint hier insbesondere, dass keine Teil-Luftleitelemente hintereinander angeordnet sind, die durch sich über die Breite der Teil-Luftleitelemente erstreckende Zwischenräume voneinander getrennt sind. Nach bevorzugter Ausführungsform der Erfindung schließt der Begriff zwischenraumfrei nicht aus, dass in dem flexiblen flächigen Luftleitelement Öffnungen vorgesehen sind, die beispielsweise zum Abgleiten bzw. Abfließen von Schmutz, Eis, Schnee und dergleichen vorgesehen sind. Diese Öffnungen erstrecken sich allerdings nicht über die gesamte Breite des Luftleitelementes. Gemäß einer empfohlenen Ausführungsform ist das flexible flächige Luftleitelement als eine einstückige flexible Plane bzw. als eine einstückige flexible Folie ausgebildet. Grundsätzlich können auch mehrere Teilelemente zu dem durchgehenden flächigen Luftleitelement fest miteinander verbunden sein.

Nach sehr empfohlener Ausführungsform, der im Rahmen der Erfindung ganz besondere Bedeutung zukommt, ist das Luftleitelement an einem Trailer eines Lastkraftwagens vorgesehen und deckt zumindest einen Teil der Fläche bzw. einen Teil der Fläche des Unterbodens des Trailers von unten ab. Es empfiehlt sich dabei, dass das Luftleitelement sich nicht über die gesamte Länge des Trailers bzw. nicht über die gesamte Länge des Unterbodens des Trailers erstreckt. Zweckmäßigerweise erstreckt sich das Luftleitelement insbesondere nicht in den Teil des Trailers, der im angeschlossenen Zustand des Trailers an eine Zugmaschine des Lastkraftwagens über der Zugmaschine angeordnet ist. Bewährtermaßen ist das Luftleitelement in diesem angeschlossenen Zustand mit Abstand zu der Zugmaschine angeordnet, wobei dieser Abstand vorzugsweise wenigstens 3 %, bevorzugt wenigstens 5 % und insbesondere wenigstens 7 % der Länge des Trailerabschnittes beträgt, der nicht über der Zugmaschine angeordnet ist. Empfohlenermaßen beträgt dieser Abstand zu der Zugmaschine maximal 30 %, insbesondere maximal 25 % und bevorzugt maximal 20 % der Länge des Trailerabschnittes, der nicht über der Zugmaschine angeordnet ist. - Es empfiehlt sich, dass das Luftleitelement sich bis zu der unteren Heckkante bzw. quasi bis zu der unteren Heckkante des Trailers erstreckt. Der Abstand des hinteren Endes des Luftleitelementes zu der unteren Heckkante des Trailers beträgt vorzugsweise maximal 2,5 %, bevorzugt maximal 2 % und insbesondere maximal 1,5 % der Länge des Trailerabschnittes, der nicht über der Zugmaschine angeordnet ist.

Es liegt im Rahmen der Erfindung, dass sich das flexible flächige Luftleitelement nicht über die gesamte Breite des Trailers bzw. nicht über die gesamte Breite des Unterbodens des Trailers erstreckt. Vorzugsweise erstreckt sich das Luftleitelement über zumindest 20 %, zweckmäßigerweise über zumindest 25 % und bevorzugt über zumindest 30 % der Breite des Trailers bzw. der Breite des Unterbodens des Trailers. Die Breite wird dabei quer bzw. senkrecht zur Fahrtrichtung bzw. zur Längsrichtung des Trailers gemessen. Es liegt weiterhin im Rahmen der Erfindung, dass sich das flexible flächige Luftleitelement über maximal 90 %, zweckmäßigerweise über maximal 85 %, bevorzugt über maximal 80 % und insbesondere über maximal 75 % und besonders bevorzugt über maximal 70 % der Breite des Trailers bzw. der Breite des Unterbodens des Trailers erstreckt. Nach einer bevorzugten Ausführungsform hat das Luftleitelement über seine Länge die gleiche Breite bzw. im Wesentlichen die gleiche Breite. Es empfiehlt sich, dass sich das Luftleitelement zwischen den Rädern zumindest einer Fahrzeugachse erstreckt und jeweils einen Abstand zu den Rädern der jeweiligen Fahrzeugachse einhält. Eine sehr empfohlene Ausführungsform der Erfindung zeichnet sich aber dadurch aus, dass im Bereich einer Fahrzeugachse bzw. im Bereich der Fahrzeugachsen an jeder Seite des Luftleitelementes zumindest ein bzw. ein Seiten-Leitelement angeschlossen ist, dass jeweils den Abstand zwischen dem Luftleitelement und dem Rad bzw. den Rädern überbrückt bzw. im Wesentlichen überbrückt. Eine besonders bevorzugte Ausführungsform der Erfindung ist dadurch gekennzeichnet, dass sich das Luftleitelement und/oder das Aggregat aus dem Luftleitelement und den an beiden gegenüberliegenden Seiten des Luftleitelementes angeschlossenen Seiten-Leitelementen mit gleicher Breite von unten über zumindest eine Fahrzeugachse bzw. über eine Mehrzahl von Fahrzeugachsen erstreckt und dabei insbesondere keine Aussparungen oder Öffnungen für die Räder der Fahrzeugachse bzw. der Fahrzeugachsen aufweist. Zweckmäßigerweise ist das Luftleitelement bzw. das Luftleitelement ohne angeschlossene Seiten-Leitelemente in der Draufsicht auf den Unterboden eines Trailers rechteckförmig bzw. im Wesentlichen rechteckförmig ausgebildet, und zwar insbesondere ohne Aussparungen für die Räder einer Fahrzeugachse bzw. für die Räder von Fahrzeugachsen. - Vorzugsweise beträgt die Breite des flächigen Luftleitelementes bzw. des flächigen Luftleitelementes ohne angeschlossene Seiten-Leitelemente 70 cm bis 150 cm, bevorzugt 80 cm bis 120 cm und besonders bevorzugt 90 cm bis 110 cm. Bei einem bevorzugt an das Luftleitelement angeschlossenen Seiten-Leitelement handelt es sich zweckmäßigerweise um ein Seitenelement in Form einer Folie bzw. Plane, das empfohlenermaßen aus dem gleichen Material besteht wie das Luftleitelement. Grundsätzlich können die Seiten-Leitelemente auch verstärkt bzw. versteift sein. Es empfiehlt sich, dass ein Seiten-Leitelement eine - senkrecht zur Fahrtrichtung orientierte - Breite von 10 cm bis 50 cm, vorzugsweise von 20 cm bis 40 cm und insbesondere von 25 cm bis 35 cm aufweist. Nach einer bewährten Ausführungsform der Erfindung ist ein Seiten-Leitelement bzw. ist jedes Seiten-Leitelement in Breitenrichtung und insbesondere entlang seiner Erstreckung zu dem jeweils zugeordneten Rad bzw. zu den jeweils zugeordneten Rädern hin nach unten bzw. zum Erdboden hin gewölbt ausgebildet. - Den Seiten-Leitelementen kommt im Rahmen der Erfindung ganz besondere Bedeutung zu und sie haben sich im Hinblick auf eine energiesparende aerodynamische Ausgestaltung der Luftleitvorrichtung besonders bewährt.

Die Erfindung sieht vor, dass zumindest eine Spannvorrichtung zur Einstellung der Verspannung des Luftleitelementes bzw. zur Einstellung der Spannkraft vorhanden ist. Diese Spannvorrichtung ist an einem Längsende bzw. im Bereich eines Längsendes des flächigen Luftleitelementes angeordnet. Bevorzugt ist die Spannvorrichtung an dem bezüglich der Fahrtrichtung vorderen Längsende bzw. im Bereich dieses vorderen Längsendes des flächigen Luftleitelementes vorgesehen. Wenn das Luftleitelement nach besonders bewährter Ausführungsform an einem Trailer eines Lastkraftwagens angebracht ist und die Spannvorrichtung empfohlenermaßen am vorderen Längsende bzw. im Bereich des vorderen Längsendes des Luftleitelementes positioniert ist, hält die Spannvorrichtung im angeschlossenen Zustand des Trailers einen Abstand zu der Zugmaschine des Trailers ein. Zweckmäßigerweise beträgt dieser Abstand wenigstens 3 %, bevorzugt wenigstens 5 % und insbesondere wenigstens 7 % der Länge des Trailerabschnittes, der nicht über der Zugmaschine angeordnet ist. Die Spannvorrichtung erstreckt sich vorzugsweise über die Breite des Luftleitelementes bzw. über zumindest den größten Teil der Breite des Luftleitelementes.

Die Spannstange weist zumindest eine Spannstange bzw. eine Spannstange auf, die sich über die Breite bzw. zumindest über den größten Teil der Breite des Luftleitelementes erstreckt. Das Luftleitelement ist an zumindest einer sich quer zur Fahrtrichtung bzw. quer zur Längsrichtung des Unterbodens erstreckenden Spannstange fixiert. Die Verspannung bzw. die Spannkraft ist durch Verschiebung der Spannstange in Fahrtrichtung bzw. in Längsrichtung des Unterbodens einstellbar. Erfindungsgemäß wird die Spannstange translatorisch in Fahrtrichtung bzw. entgegen der Fahrtrichtung verschoben bzw. bewegt, um die Verspannung bzw. Spannkraft einzustellen. Gemäß einer empfohlenen Ausführungsvariante wird die Spannkraft bzw. die Verspannung des Luftleitelementes erhöht, wenn die Spannstange in Fahrtrichtung verschoben wird. Grundsätzlich kann die Konstruktion aber auch so getroffen sein, dass die Spannkraft erhöht wird, wenn die Spannstange entgegen der Fahrtrichtung verschoben wird. Eine bewährte Ausführungsform der Erfindung zeichnet sich dadurch aus, dass das sich in Fahrtrichtung erstreckende Luftleitelement an seinem vorderen Längsende zunächst an zumindest einer Spannstange bzw. an einer Spannstange fixiert ist und sich anschließend weiter in Fahrtrichtung unter zumindest einer bzw. einer Umlenkstange erstreckt, wobei das Luftleitelement an dieser Umlenkstange zweckmäßigerweise nach oben hin bzw. zum Unterboden hin umgelenkt wird. Dabei ist der umgelenkte Abschnitt des Luftleitelementes nach einer Ausführungsform der Erfindung quer, insbesondere senkrecht bzw. im Wesentlichen senkrecht zur Fahrtrichtung positioniert. Es liegt im Rahmen der Erfindung, dass die Länge des von der Umlenkstange umgelenkten Abschnittes des Luftleitelementes mindestens 2 %, bevorzugt mindestens 3 % der Länge des Luftleitelementes in Fahrtrichtung entspricht. Zweckmäßigerweise ist ein Ende des umgelenkten Abschnittes an zumindest einer bzw. an einer Fixierungsstange fixiert, wobei sich die Fixierungsstange vorzugsweise quer, insbesondere senkrecht bzw. im Wesentlichen senkrecht zur Fahrtrichtung erstreckt.

Eine besonders empfohlene Ausführungsform der Erfindung ist dadurch gekennzeichnet, dass zur Einstellung der Verspannung bzw. der Spannkraft die Spannstange relativ zur Umlenkstange in Fahrtrichtung bzw. entgegen der Fahrtrichtung verschiebbar ist. Zweckmäßigerweise ist die Spannstange parallel bzw. im Wesentlichen parallel zu der Umlenkstange angeordnet und bevorzugt parallel zu der Fixierungsstange orientiert. Es liegt im Rahmen der Erfindung, dass die Verspannung bzw. die Spannkraft mittels zumindest einer Spindel bzw. mittels zumindest einer Gewindespindel einstellbar ist. Empfohlenermaßen ist die zumindest eine Spindel bzw. Gewindespindel an der Spannstange angeschlossen und durchgreift die Umlenkstange. Eine besonders bevorzugte Ausführungform der Erfindung ist dadurch gekennzeichnet, dass zumindest eine Gewindespindel mit ihrem Außengewinde in ein Innengewinde der Umlenkstange eingreift und mit einem Ende an der Spannstange fixiert ist. Durch Betätigung der Gewindespindel kann die Spannstange relativ zu der Umlenkstange in Längsrichtung des Fahrzeuges bzw. des Trailers verschoben werden. Empfohlenermaßen werden zumindest zwei bzw. zwei Gewindespindeln eingesetzt, die jeweils mit ihrem Außengewinde in ein Innengewinde der Umlenkstange eingreifen und jeweils mit ihrem Ende an der Spannstange angeschlossen sind. Durch Betätigung der beiden Gewindespindeln kann die Spannstange relativ zur Umlenkstange in Längsrichtung des Fahrzeuges bewegt werden und auf diese Weise kann die Verspannung bzw. die Spannkraft eingestellt werden.

Es liegt weiterhin im Rahmen der Erfindung, dass ein Längsende des Luftleitelementes an einer sich quer zur Fahrtrichtung bzw. quer zur Längsrichtung des Unterbodens erstreckenden Gegen-Spannstange fixiert ist. Dabei handelt es sich vorzugsweise um das hintere Längsende des Luftleitelementes und zweckmäßigerweise ist die Gegen-Spannstange im Heckbereich und insbesondere im Heckbereich eines Trailers fixiert. Die Gegen-Spannstange ist als passives Spannelement ausgebildet und ist lediglich an dem Unterboden des Fahrzeuges befestigt. Erfindungsgemäß ist die Gegen-Spannstange im Heckbereich eines Trailers befestigt und vorzugsweise in am Trailer bzw. am Unterboden fixierte Halterungen bzw. Halteprofile eingehängt.

Gemäß bevorzugter Ausführungsform der Erfindung deckt das flächige Luftleitelement zumindest 30 %, vorzugsweise zumindest 35 % und bevorzugt zumindest 40 % der Länge I einer Fahrzeugachse ab und bevorzugt jeweils der Länge I mehrerer Fahrzeugachsen ab. Dabei ist das flächige Luftleitelement bewährtermaßen entlang einer Fahrzeugachse bzw. entlang mehrerer Fahrzeugachsen als durchgehendes Luftleitelement und vorzugsweise als einstückiges Luftleitelement ausgebildet. - Die

Erfindung zeichnet sich dadurch aus, dass das flächige Luftleitelement zumindest zwei Fahrzeugachsen und insbesondere zumindest drei bzw. drei Fahrzeugachsen zumindest teilweise abdeckt. Wenn das erfindungsgemäße Luftleitelement nach sehr bevorzugter Ausführungsform an einem Trailer eines Lastkraftwagens angeordnet ist, handelt es sich zweckmäßigerweise bei den zumindest zwei Fahrzeugachsen bzw. bei den zumindest drei bzw. drei Fahrzeugachsen um die im hinteren Bereich des Trailers unmittelbar hintereinander angeordneten Fahrzeugachsen. - Es hat sich bewährt, dass das flächige Luftleitelement den Abstandsraum zwischen den Fahrzeugachsen abdeckt, und zwar vorzugsweise vollständig abdeckt bzw. im Wesentlichen vollständig abdeckt. Es liegt im Rahmen der Erfindung, dass das flächige Luftleitelement in dem Abstandsraum zwischen den Fahrzeugachsen als durchgehendes Luftleitelement und empfohlenermaßen als einstückiges, durchgehendes Luftleitelement ausgeführt.

Der Erfindung liegt die Erkenntnis zugrunde, dass Kraftfahrzeuge, insbesondere Lastkraftwagen und vor allem Trailer von Lastkraftwagen einen sehr ungleichmäßigen Unterboden mit vielen kantigen Bodenkomponenten aufweisen, die einen ungünstigen Luftwiderstand des Fahrzeuges bzw. des Trailers bedingen. Bei den Bodenkomponenten handelt es sich unter anderem um am Unterboden angebrachte Tanks, Stützen, Palettenkästen, Achsen und sonstige Fahrwerksteile. Diese Bodenkomponenten bewirken, dass die Luftströmung, die unterhalb des Fahrzeuges bzw. unterhalb des Trailers von der Fahrzeugvorderseite zur Fahrzeughinterseite strömt, starken Widerständen ausgesetzt ist, wodurch relativ viel Impuls verloren geht. Der Erfindung liegt in diesem Zusammenhang weiterhin die Erkenntnis zugrunde, dass diese Nachteile mit einer erfindungsgemäßen Luftleitvorrichtung effektiv vermieden bzw. zumindest effizient reduziert werden können. Der Erfindung liegt außerdem die Erkenntnis zugrunde, dass ein flexibles, flächig ausgebildetes Luftleitelement - das sich über einen großen Teil der Fläche des Unterbodens des Fahrzeuges erstreckt - sehr vorteilhafte bzw. optimale Strömungsverhältnisse im Unterbodenbereich ermöglicht. Es wird eine verbesserte Durchströmung des Bereichs zwischen dem Unterboden des Fahrzeuges und dem Erdboden erreicht, der relativ wenig Luftwiderstand entgegengesetzt wird. Das gilt vor allem für die sehr bevorzugte Ausführungsform der Erfindung, bei der das Luftleitelement den Unterboden eines Trailers eines Lastkraftwagens abdeckt. Dieser Ausführungsform kommt - wie bereits erwähnt - im Rahmen der Erfindung ganz besondere Bedeutung zu.

Nach einer Ausführungsvariante der Erfindung weist das flexible, flächige Luftleitelement zumindest eine in seiner Fläche vorgesehene Öffnung auf. Vorzugsweise ist die Öffnung als Belüftungsöffnung und/oder als Austrittsöffnung eingerichtet bzw. ausgebildet. Es liegt im Rahmen der Erfindung, dass in Längsrichtung des flächigen Luftleitelementes bzw. in Längsrichtung des Fahrzeuges eine Mehrzahl von Öffnungen hintereinander angeordnet ist. Eine Ausführungsform zeichnet sich dadurch aus, dass eine Öffnung im Bereich zumindest einer Achse bzw. im Bereich unterhalb zumindest einer Achse des Fahrzeuges bzw. des Trailers vorgesehen ist. Zweckmäßigerweise ist jeder Achse zumindest eine solche Öffnung zugeordnet. Die jeweilige Öffnung kann dann insbesondere als Belüftungsöffnung bzw. als Belüftungsöffnung für Bremsen des Fahrzeuges vorgesehen sein. Es liegt im Rahmen der Erfindung, dass die zumindest eine Öffnung so ausgestaltet ist, dass die im Fahrbetrieb unterhalb des Fahrzeuges bzw. unterhalb des Trailers strömende Luftströmung zu einem Teil durch die Öffnung in den Bereich zwischen flächigem Luftleitelement und Unterboden des Fahrzeuges bzw. Trailers eingeleitet wird. Gemäß einer Ausführungsform der Erfindung beträgt die Fläche einer solchen Öffnung maximal 10 %, vorzugsweise maximal 7 %, bevorzugt maximal 5 % und sehr bevorzugt maximal 1 % der Fläche des gesamten Luftleitelementes. - Gemäß einer anderen Ausführungsform kann eine solche Öffnung als Austrittsöffnung für Schmutz, Eis, Schnee und dergleichen dienen. In diesem Fall kann Schmutz, Eis, Schnee und dergleichen aus dem Bereich zwischen Unterboden und flächigem Luftleitelement durch die Öffnung nach unten hin austreten bzw. aus dem Zwischenraum zwischen Unterboden und Luftleitelement herausfallen. Eine solche Öffnung kann auch als Zugangsöffnung zu Bauteilen des Fahrzeuges zwischen dem Unterboden und dem flächigen Luftleitelement dienen, beispielsweise als Zugangsöffnung für Tankstutzen, Bremsen oder dergleichen. Nach einer Ausführungsvariante der Erfindung sind in dem flächigen, flexiblen Luftleitelement zumindest zwei, vorzugsweise zumindest drei Öffnungen vorgesehen.

Gemäß einer Ausführungsform der Erfindung weist das flächige Luftleitelement zumindest einen Gurt auf, der sich entlang der Fläche des Luftleitelementes erstreckt und das flächige Luftleitelement verstärkt bzw. abstützt. Vorzugsweise ist eine Mehrzahl von Gurten für die Verstärkung bzw. Abstützung des flächigen Luftleitelementes vorgesehen. Zweckmäßigerweise ist die Lage und die Ausrichtung des Gurtes bzw. der Gurte so gewählt, dass das flexible Luftleitelement - insbesondere im gespannten Zustand des Gurtes bzw. der Gurte und/oder des Luftleitelementes - an lokalen Stellen Wölbungen bzw. Krümmungen aufweist, sodass auf diese Weise eine besonders günstige Führung der Luftströmung erzielt wird. - Es liegt im Rahmen der Erfindung, dass der zumindest eine Gurt an zumindest einem seiner Enden an dem Fahrzeug bzw. an dem Trailer fixiert ist. Ein Anschluss bzw. eine Fixierung der Gurte erfolgt zweckmäßigerweise im vorderen Bereich des Fahrzeuges, insbesondere im Bereich der vorderen Stützen des Trailers und/oder an der Heckseite des Fahrzeuges, insbesondere an einem heckseitigen Unterfahrschutz und/oder an den Achsen des Fahrzeuges. Gemäß einer Ausführungsvariante ist ein Gurt mittels zumindest einer Feder im Achsbereich an dem Fahrzeug fixiert. Damit kann man das Heben und Senken von sogenannten Lift-Achsen ausgleichen. - Nach einer Ausführungsform kann ein Gurt über zumindest einen Teil seiner Länge in das Luftleitelement bzw. in die Plane eingearbeitet bzw. integriert sein.

Gemäß bevorzugter Ausführungsform der Erfindung erstreckt sich zumindest ein Gurt und bevorzugt erstreckt sich eine Mehrzahl von Gurten - beispielsweise zwei Gurte - in Längsrichtung des flächigen Luftleitelementes bzw. in Längsrichtung des Fahrzeuges. Zweckmäßigerweise erstreckt sich zumindest ein Gurt bzw. eine Mehrzahl von Gurten über zumindest 90 % der Länge des flächigen Luftleitelementes, vorzugsweise über zumindest 95 % der Länge des flächigen Luftleitelementes in Längsrichtung des Luftleitelementes und besonders bevorzugt über die gesamte Länge des Luftleitelementes. Empfohlenermaßen sind die Enden der Gurte dann am vorderseitigen Ende des Fahrzeuges - insbesondere im Bereich der Stützen eines Trailers - an das Fahrzeug angeschlossen sowie im heckseitigen Bereich des Fahrzeuges, beispielsweise am heckseitigen Unterfahrschutz. Die Gurte können aber auch an den Seiten des Fahrzeuges angeschlossen sein, beispielsweise an entsprechenden Haltern, Trägern, Winkeln, Streben und dergleichen. - Gemäß einer empfohlenen Ausführungsform der Erfindung erstreckt sich zumindest ein Gurt und erstreckt sich bevorzugt eine Mehrzahl von Gurten in Längsrichtung des flächigen Luftleitelementes unterhalb zumindest einer Achse, bevorzugt unterhalb einer Mehrzahl von Achsen entlang des Unterbodens des Fahrzeuges. Eine bewährte Ausführungsvariante der Erfindung ist dadurch gekennzeichnet, dass sich das flächige Luftleitelement aufgrund des Verlaufs bzw. der Lage der Gurte an zumindest einem Randbereich, insbesondere an beiden Randbereichen an der Seite bzw. an den Seiten des Fahrzeuges nach unten bzw. zum Erdboden hin wölbt. Über diese Wölbung kann dann problemlos Schmutz, Eis, Schnee und Wasser und dergleichen von dem flächigen Luftleitelement nach außen hin ablaufen. In den gebildeten Kragen bzw. in die gebildete Wölbung des flexiblen Luftleitelementes können auch Belüftungslöcher, insbesondere für die Bremsen des Fahrzeuges eingebracht werden.

Eine bevorzugte Ausführungsform der Erfindung ist dadurch gekennzeichnet, dass das flächige Luftleitelement mit der Maßgabe an dem Fahrzeug fixiert ist, dass das Luftleitelement an zumindest einem Randbereich, bevorzugt an zwei gegenüberliegenden Randbereichen seitlich an dem Fahrzeug nach unten bzw. zum Erdboden hin gewölbt bzw. gebogen ist. Nach einer Ausführungsvariante können - wie oben beschrieben - die Wölbungen durch entsprechende Anordnung von Gurten erzeugt werden.

Eine sehr bevorzugte Ausführungsform der Erfindung ist dadurch gekennzeichnet, dass zumindest eine Unterstützungsstrebe - vorzugsweise eine Mehrzahl von Unterstützungsstreben - vorgesehen ist/sind, wobei sich die Unterstützungsstrebe bzw. die Unterstützungsstreben im montierten Zustand der Luftleitvorrichtung quer zur Längsrichtung des Luftleitelementes bzw. quer zur Längsrichtung des Fahrzeuges erstreckt/erstrecken. Zweckmäßigerweise ist eine Unterstützungsstrebe bzw. sind die Unterstützungsstreben senkrecht bzw. im Wesentlichen senkrecht zur Längsrichtung des Luftleitelementes bzw. zur Längsrichtung des Fahrzeuges orientiert. Die Unterstützungsstreben bzw. Querstreben können die lokale Form des flexiblen Leitelementes unterstützen und das flexible Leitelement in Form halten, sodass das flexible Luftleitelement bzw. die Plane/Folie nicht knickt oder krempelt. Gemäß sehr bewährter Ausführungsform der Erfindung ist zumindest eine Unterstützungsstrebe bzw. sind die Unterstützungsstreben gewölbt bzw. gebogen ausgebildet und zwar insbesondere im Bereich der Räder gewölbt bzw. gebogen ausgebildet. Dabei ist die Wölbung bzw. Biegung bevorzugt zum Unterboden hin orientiert. Es liegt im Rahmen der Erfindung, dass die zumindest eine Unterstützungsstrebe als Formelement aus Kunststoff bzw. aus Schaumstoff ausgebildet ist. Nach einer sehr empfohlenen Ausführungsform besteht die zumindest eine Unterstützungsstrebe aus Metall bzw. im Wesentlichen aus Metall. Zweckmäßigerweise ist eine Unterstützungsstrebe weniger flexibel als das flexible Luftleitelement und bevorzugt ist die Dicke einer Unterstützungsstrebe höher bzw. viel höher als die Dicke des flexiblen Luftleitelementes.

Gemäß einer empfohlenen Ausführungsform der Erfindung ist zumindest einer Achse bzw. ist einer Mehrzahl von Achsen des Fahrzeuges jeweils eine Unterstützungsstrebe zugeordnet, die zweckmäßigerweise unterhalb der jeweiligen Achse angeordnet ist und das flexible Luftleitelement bzw. die Plane/Folie in diesem Bereich unterstützt bzw. abstützt. Es liegt im Rahmen der Erfindung, dass eine Unterstützungsstrebe bzw. dass die Unterstützungsstreben an dem flexiblen Leitelement bzw. an der Plane/Folie fixiert ist/sind und besonders bevorzugt flächig fixiert ist/sind, beispielsweise durch Verkleben.

Eine sehr empfohlene Ausführungsform der Erfindung zeichnet sich dadurch aus, dass eine aus dem Unterboden des Fahrzeuges nach unten vorkragende Bodenkomponente mittels zumindest einer Luftleitschale verkleidet ist, wobei die Luftleitschale die Bodenkomponente jeweils zur Fahrzeugvorderseite V hin abdeckt und zweckmäßigerweise zumindest einen zur Fahrzeughinterseite H hin gewölbten bzw. abgebogenen Schalenluftleitflügel aufweist. Vorzugsweise ist eine solche Luftleitschale an mehreren aus dem Unterboden des Fahrzeuges nach unten vorkragenden Bodenkomponenten jeweils angeordnet. Bei der vorkragenden Bodenkomponente handelt es sich insbesondere um eine aus dem Unterboden eines Trailers im vorderen Bereich des Trailers vorkragende Stütze. Es liegt im Rahmen der Erfindung, dass die Luftleitschale die Bodenkomponente jeweils zur Fahrzeugvorderseite V hin abdeckt und zweckmäßigerweise zwei an diesem abdeckenden Bereich der Luftleitschale angeschlossene zur Fahrzeughinterseite H hin gewölbte bzw. abgebogene Schalenluftleitflügel aufweist. Vorzugsweise handelt es sich bei den Luftleitschalen um Kunststoff-Formteile, deren Dicke größer ist bzw. wesentlich größer ist als die Dicke des flächigen Luftleitelementes und die bevorzugt weniger flexibel sind als das flächige, flexible Luftleitelement. Eine solche Luftleitschale dient der besseren Luftströmungsführung um scharfe Kanten des Fahrzeuges im Unterbodenbereich sowie dem Schutz des flächigen, flexiblen Luftleitelementes an diesen scharfen Kanten im Unterbodenbereich. Die Luftleitschalen sollen insbesondere verhindern, dass das flexible Luftleitelement bzw. die Plane/Folie um scharfe Kanten im Unterbodenbereich knickt, sodass Nachteile für das Luftleitelement und insbesondere für eine optimale Luftströmung entstehen. Es liegt im Rahmen der Erfindung, dass die Flächen einer Luftleitschale in Längsrichtung des Fahrzeuges ausreichend lang sind, sodass sie auch bei unterschiedlichen Fahrzeugtypen und Verspannungen des flexiblen Luftleitelementes den Bereich von Kanten bzw. scharfen Kanten im Unterbodenbereich effektiv abdecken können. Gemäß einer Ausführungsvariante ist die Fläche einer Luftleitschale zur Fahrzeugvorderseite hin konvex oder konkav ausgeformt. Bei den Luftleitschalen handelt es sich zweckmäßigerweise um gewölbte bzw. gebogene Kunststoffplatten und/oder um gewölbte bzw. gebogene Schaumstoffplatten. Eine sehr empfohlene Ausführungsform der Erfindung zeichnet sich dadurch aus, dass die Luftleitschalen jeweils an einem Befestigungsprofil angeschlossen sind, wobei die Befestigungsprofile gemäß einer bevorzugten Ausführungsvariante an Stützen des Trailers vorgesehen sind. Zweckmäßigerweise werden die Luftleitschalen durch die sich zwischen den Befestigungsprofilen erstreckende Umlenkstange und/oder durch die sich zwischen den Befestigungsprofilen erstreckende Fixierungsstange unterstützt bzw. stabilisiert. Es liegt auch im Rahmen der Erfindung, dass eine Luftleitschale mit dem flächigen Luftleitelement verbunden ist und vorzugsweise flächig mit dem flächigen Luftleitelement verbunden ist. Diese Verbindung ist bevorzugt eine stoffschlüssige Verbindung und zweckmäßigerweise ist die Luftleitschale über Verkleben, Verschweißen oder dergleichen mit dem Luftleitelement verbunden.

Nach einer Ausführungsform der Erfindung wird das erfindungsgemäße flächige, flexible Luftleitelement - insbesondere an den Fahrzeugseiten bzw. Trailerseiten - an einem am Unterboden angeschlossenen Palettenkasten bzw. an Palettenkästen befestigt. Bei Fahrzeugen ohne Palettenkästen kann das Luftleitelement bzw. die Plane/Folie seitlich an Seitenunterfahrschutz-Elementen und/oder an dem Fahrzeugchassis befestigt bzw. verspannt werden, sodass sich auch eine Verspannung zu den Seiten des Fahrzeuges hin ergibt. Dadurch erhält man aufgestellte Seitenflächen des Luftleitelementes im Bereich des seitlichen Unterfahrschutzes. Grundsätzlich kann man das flächige Luftleitelement auch im Heckbereich des Fahrzeuges an dem Chassis bzw. an dem äußeren Rahmen des Fahrzeuges bzw. Trailers befestigen. Eine Ausführungsform der Erfindung ist dadurch gekennzeichnet, dass das Luftleitelement mit seiner vorderen Stirnseite an im vorderen Bereich des Fahrzeuges vorgesehenen Befestigungsprofilen fixiert ist und/oder mit seiner hinteren Stirnseite an im Heckbereich des Fahrzeuges angeordneten Halteprofilen fixiert ist. Grundsätzlich kann das Luftleitelement auch an einem heckseitigen Unterfahrschutz (Stoßstange und dergleichen) angeschlossen sein.

Eine bevorzugte Ausführungsvariante der Erfindung zeichnet sich dadurch aus, dass die vertikale Höhe des flexiblen Luftleitelementes lokal verändert werden kann. Diese Höhenvariierung kann durch Seile, Stützen oder dergleichen realisiert werden. - Es liegt im Rahmen der Erfindung, dass Öffnungen in dem flächigen Luftleitelement als größere Wartungsöffnungen ausgebildet sind, die bevorzugt mittels Reißverschlüssen und/oder Klettverschlüssen geöffnet bzw. geschlossen werden können. Solche Wartungsöffnungen sind insbesondere im Bereich der Fahrzeugachsen zweckmäßig.

Eine ganz besonders empfohlene Ausführungsform der Erfindung wird nachfolgend näher erläutert. Diese Ausführungsform hat sich vor allem an Trailern von Lastkraftwagen bewährt. Es empfiehlt sich, dass zumindest ein Quer-Leitelement vorgesehen ist, das mit einem ersten Elementabschnitt einen Bereich des Unterbodens neben dem flächigen Luftleitelement von unten her abdeckt und das vorzugsweise mit einem quer zu dem ersten Elementabschnitt angeordneten zweiten Elementabschnitt einen Seitenbereich des Fahrzeuges bzw. des Trailers abdeckt. Zweckmäßigerweise ist dieses Quer-Leitelement an dem flächigen Luftleitelement fixiert, und zwar empfohlenermaßen mit seinem ersten Elementabschnitt an dem flächigen Luftleitelement fixiert. Es liegt im Rahmen der Erfindung, dass es sich bei dem Quer-Leitelement um ein als flexible Plane bzw. als flexible Folie ausgebildetes Quer-Leitelement handelt. Nach einer bewährten Ausführungsform besteht das Quer-Leitelement aus dem gleichen Material bzw. im Wesentlichen aus dem gleichen Material wie das flächige Luftleitelement. Zweckmäßigerweise ist das Quer-Leitelement einstückig aus dem ersten Elementabschnitt und aus dem zweiten Elementabschnitt zusammengesetzt. Es liegt im Rahmen der Erfindung, dass der zweite - einen Seitenbereich des Fahrzeuges bzw. des Trailers abdeckende - Elementabschnitt von dem Seitenbereich entfernbar bzw. abklappbar ist. Eine besonders empfohlene Ausführungsform der Erfindung ist dadurch gekennzeichnet, dass der zweite Elementabschnitt mittels einer Klappvorrichtung an den Seitenbereich anklappbar und von dem Seitenbereich abklappbar ist. Es liegt dabei im Rahmen der Erfindung, dass das Quer-Leitelement durch das Anklappen des zweiten Elementabschnittes an den Seitenbereich gespannt bzw. verspannt wird. Gemäß einer Ausführungsvariante weist die Klappvorrichtung zumindest zwei bzw. zwei Klappstützen auf, an denen zweckmäßigerweise der zweite Elementabschnitt fixiert ist und mit denen der zweite Elementabschnitt an den Seitenbereich anklappbar ist bzw. von dem Seitenbereich abklappbar ist. Zweckmäßigerweise sind die zumindest zwei bzw. die zwei Klappstützen parallel bzw. im Wesentlichen parallel zueinander angeordnet. Eine sehr empfohlene Ausführungsform ist dadurch gekennzeichnet, dass die Klappvorrichtung zumindest ein Rastelement aufweist und dass im angeklappten Zustand des zweiten Elementabschnittes der zweite Elementabschnitt mit Hilfe des zumindest einen Rastelementes über eine Rastverbindung bzw. Schnappverbindung fixierbar ist bzw. an dem Seitenbereich fixierbar ist.

Gemäß besonders bevorzugter Ausführungsform der Erfindung ist jeweils zumindest ein Quer-Leitelement an gegenüberliegenden Seiten des Fahrzeuges angeordnet. Vorzugsweise sind zwei Quer-Leitelemente in Bezug auf die Fahrtrichtung bzw. in Bezug auf die Längsrichtung des Unterbodens auf gleicher Länge bzw. auf gleicher Höhe unmittelbar gegenüber angeordnet. Es hat sich bewährt, dass die beiden Quer-Leitelemente im hinteren Bereich des Fahrzeuges und insbesondere im hinteren Bereich des Trailers angeordnet sind und besonders bevorzugt bezüglich der Fahrtrichtung hinter den Fahrzeugachsen des Trailers angeordnet sind. Es liegt im Rahmen der Erfindung, dass zumindest ein Quer-Leitelement in Bezug auf die Fahrtrichtung des Fahrzeuges bzw. des Trailers hinter der letzten Fahrzeugachse des Fahrzeuges bzw. des Trailers angeordnet ist. - Gemäß einer bevorzugten Ausführungsform der Erfindung sind gegenüberliegende Quer-Leitelemente in Bezug auf die Fahrtrichtung des Fahrzeuges bzw. des Trailers vor zumindest einer Fahrzeugachse bzw. vor den hinteren Fahrzeugachsen des Fahrzeuges bzw. des Trailers angeordnet. Das gilt insbesondere bei Trailern ohne vordere Palettenkästen in diesem Bereich, wo die Quer-Leitelemente als Seitenverkleidung fungieren können.

Nach einer bevorzugten Ausführungsform der Erfindung ist zwischen dem flächigen Luftleitelement und dem Unterboden und/oder zwischen einem Quer-Leitelement und dem Unterboden zumindest ein Schutzkissen bzw. Schutzpolster angeordnet, das zweckmäßigerweise einen Abstand des Luftleitelementes bzw. des Quer-Leitelementes zu scharfkantigen Teilen des Fahrzeuges bzw. des Trailers sicherstellt. Gemäß einer Ausführungsvariante ist eine Mehrzahl solcher Schutzkissen bzw. Schutzpolster zwischen Luftleitelement und Unterboden bzw. zwischen Quer-Leitelement und Unterboden vorhanden.

Gegenstand der Erfindung ist auch ein Kraftfahrzeug - insbesondere ein Lastkraftwagen - mit zumindest einer erfindungsgemäßen Luftleitvorrichtung. Die Luftleitvorrichtung ist vorzugsweise an dem Trailer des Lastkraftwagens vorgesehen.

Der Erfindung liegt die Erkenntnis zugrunde, dass mit der erfindungsgemäßen Luftleitvorrichtung bzw. mit dem erfindungsgemäßen flächigen, flexiblen Luftleitelement eine Optimierung des Unterbodenbereiches von Fahrzeugen - insbesondere von Trailern - im Hinblick auf die Aerodynamik im Fahrbetrieb erzielt werden kann. Die Erfindung ermöglicht eine einfache, wenig aufwendige und nichtsdestoweniger effektive aerodynamische Verkleidung des Unterbodens. Bei dem erfindungsgemäßen flächigen Luftleitelement handelt es sich gleichsam um ein adaptives, flexibles Luftleitelement, das sich an vorkragende Bodenelemente im Unterbodenbereich anpassen kann, sodass diese vorkragenden Bodenelemente in aerodynamischer Hinsicht nicht mehr bzw. deutlich weniger stören. Mit dem erfindungsgemäßen flächigen Luftleitelement kann eine aerodynamisch optimale Fläche am Unterboden des Fahrzeuges bzw. des Trailers realisiert werden. Eine solche erfindungsgemäße Luftleitvorrichtung kann zudem an einer Vielzahl von Fahrzeugen bzw. Trailern eingesetzt werden, ohne dass dazu nennenswerte Veränderungen der Luftleitvorrichtung erforderlich wären. Die erfindungsgemäße aerodynamische Verkleidung des Unterbodens kann mit einfachen und kostengünstigen Mitteln verwirklicht werden.

Der Strömungswiderstand des Fahrzeuges und insbesondere der Strömungswiderstand von Lastkraftwagen mit Trailern kann mittels einer erfindungsgemäßen Luftleitvorrichtung effizient und funktionssicher reduziert werden.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Unteransicht eines Lastkraftwagens aus Zugmaschine und Trailer mit einer erfindungsgemäßen Luftleitvorrichtung,

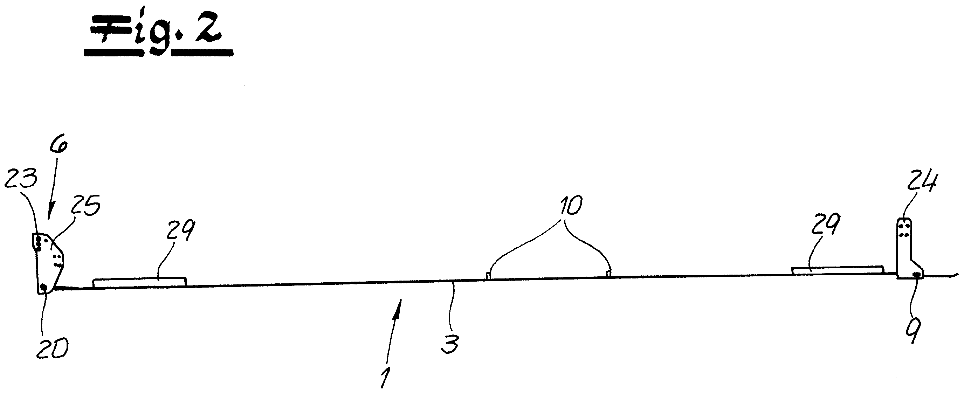

- Fig. 2: eine Seitenansicht eines Luftleitelementes einer erfindungsgemäßen Luftleitvorrichtung,
- Fig. 3: eine Unteransicht des Trailers mit angebrachter Luftleitvorrichtung,
- Fig. 4: eine perspektivische Unteransicht des vorderen Bereichs einer erfindungsgemäßen Luftleitvorrichtung,
- Fig. 5: eine perspektivische Draufsicht auf den vorderen Bereich einer erfindungsgemäßen Luftleitvorrichtung,
- Fig. 6: eine perspektivische Draufsicht auf den hinteren Bereich einer erfindungsgemäßen Luftleitvorrichtung,
- Fig. 7: eine perspektivische Ansicht des hinteren Bereichs eines Trailers mit einem Quer-Leitelement einer erfindungsgemäßen Luftleitvorrichtung,

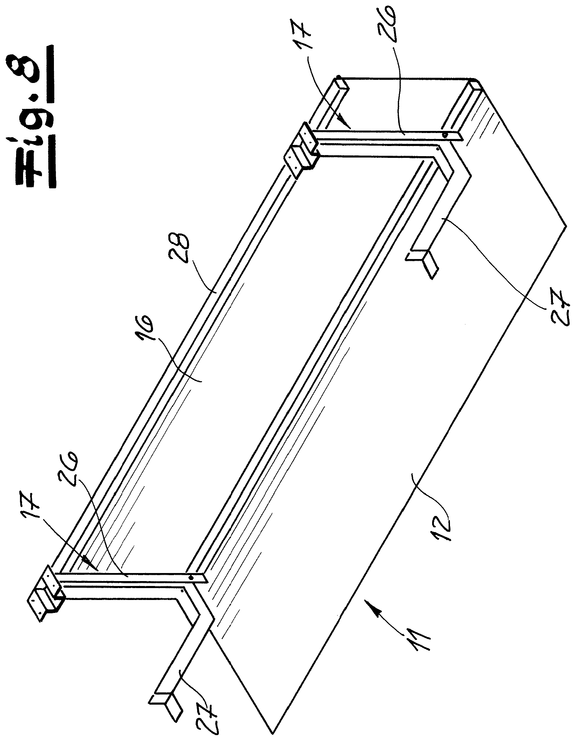

- Fig. 8: eine pespektivische Ansicht eines Quer-Leitelementes,
- Fig. 9: den Gegenstand nach Fig. 3 in einer alternativen Ausführungsform und
- Fig. 10: eine Ansicht des Schnittes A-A durch den Gegenstand der Fig. 9.

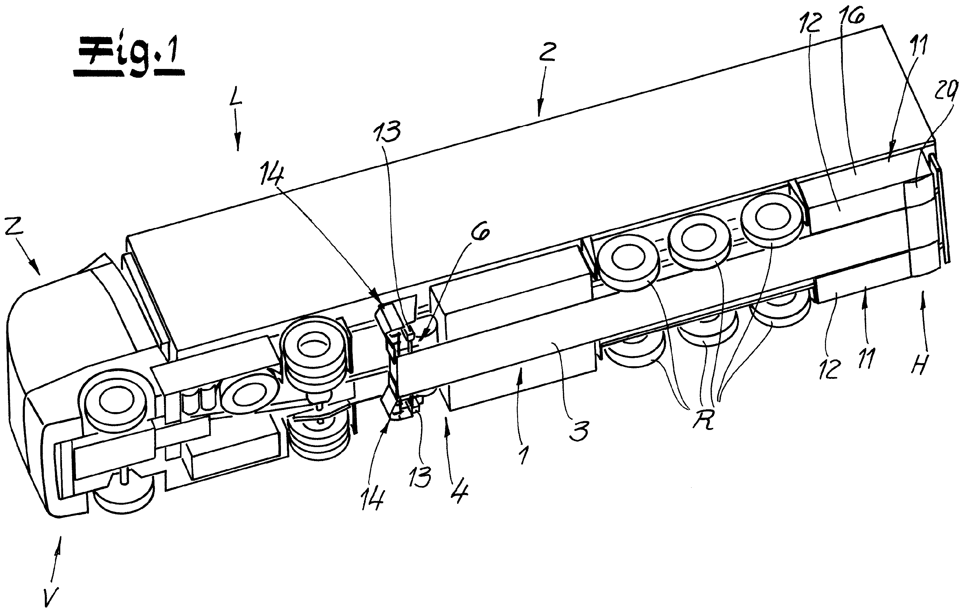

In der Fig. 1 ist ein Lastkraftwagen L aus einer Zugmaschine Z und einem Trailer 2 gezeigt. Der Trailer 2 ist mit einer erfindungsgemäßen Luftleitvorrichtung 1 mit einem Luftleitelement 3 ausgestattet. Das erfindungsgemäße flexible, flächige Luftleitelement 3 ist vorzugsweise und im Ausführungsbeispiel als flexible Plane ausgebildet.

Das Luftleitelement 3 bzw. die Plane ist bevorzugt und im Ausführungsbeispiel am Unterboden 4 des Trailers 2 angeschlossen und dieses Luftleitelement 3 deckt empfohlenermaßen und im Ausführungsbeispiel mindestens 25 % der Fläche des Unterbodens 4 ab. Zweckmäßigerweise und im Ausführungsbeispiel erstreckt sich das Luftleitelement 3 bzw. die Plane in Längsrichtung des Lastkraftwagens L bzw. des Trailers 2 und deckt dabei die Fahrzeugachsen 5 des Trailers 2 teilweise ab. Bevorzugt und im Ausführungsbeispiel werden von dem Luftleitelement 3 mehr als 45 % der Länge I der Fahrzeugachsen 5 zwischen den Rädern R abgedeckt. Dabei wird auch der Abstandsraum A zwischen den Fahrzeugachsen 5 bewährtermaßen und im Ausführungsbeispiel abgedeckt. - Bei dem flexiblen, flächigen Luftleitelement 3 kann es sich um eine flexible und dehnbare bzw. elastisch dehnbare Plane handeln.

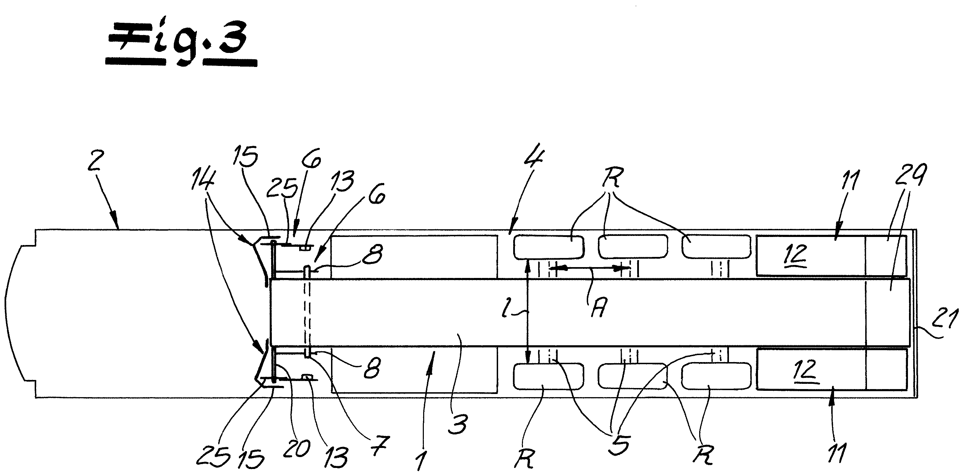

Die Fig. 3 zeigt eine Ausführungsform einer erfindungsgemäßen Luftleitvorrichtung 1 für einen Trailer 2 in einer Unteransicht. Hier ist eine bevorzugte Form des erfindungsgemäßen Luftleitelementes 3 bzw. der Plane gezeigt. - Vorzugsweise und im Ausführungsbeispiel ist das flexible flächige Luftleitelement 3 ein einziges, durchgehendes und zwischenraumfreies, sich in Längsrichtung des Unterbodens 4 erstreckendes Luftleitelement 3. Im Ausführungsbeispiel handelt es sich um eine einzige, durchgehende und zwischenraumfreie, sich in Längsrichtung des Unterbodens 4 erstreckende flexible Plane als Luftleitelement 3. In der Fig. 3 ist erkennbar, dass dieses Luftleitelement 3 bzw. diese Plane über ihre gesamte, sich entlang des Unterbodens 4 erstreckende Länge die gleiche Breite aufweist. Das durchgehende Luftleitelement 3 bzw. die durchgehende Plane verläuft dabei zwischen den Rädern R unterhalb der Fahrzeugachsen 5, und zwar bevorzugt und im Ausführungsbeispiel mittig bzw. zentralmittig zwischen den Rädern R der Fahrzeugachsen 5. Das Luftleitelement 3 bzw. die Plane ist empfohlenermaßen und im Ausführungsbeispiel in Bezug auf die Räder R ausnehmungsfrei ausgebildet und verläuft bevorzugt und im Ausführungsbeispiel mit Abstand zu den Rädern R unterhalb der Fahrzeugachsen 5. In der Fig. 3 ist weiterhin erkennbar, dass das Luftleitelement 3 bzw. die Plane bis zur unteren Heckkante 21 des Trailers 2 verläuft und vorzugsweise lediglich mit geringem Abstand zu dieser unteren Heckkante 21 positioniert ist. Zweckmäßigerweise und im Ausführungsbeispiel (Fig. 3) ist das in Fahrtrichtung vordere Ende des Luftleitelementes 3 bzw. der Plane mit Abstand zu dem in Fahrtrichtung vorderen Ende des Trailers 2 angeordnet. Dieser Abstand zu dem in Fahrtrichtung vorderen Ende des Trailers 2 beträgt vorzugsweise zumindest 10%, bevorzugt zumindest 20 % und insbesondere zumindest 25 % der gesamten Länge des Trailers 2. Fernerhin liegt es im Rahmen der Erfindung, dass sich das Luftleitelement 3 bzw. die Plane insbesondere nicht in den Teil des Trailers 2 erstreckt, der im angeschlossenen Zustand des Trailers 2 an eine Zugmaschine Z des Lastkraftwagens L über der Zugmaschine Z angeordnet ist. Bewährtermaßen ist das Luftleitelement 3 bzw. die Plane in diesem angeschlossenen Zustand mit Abstand zu der Zugmaschine Z angeordnet (Fig. 1), wobei dieser Abstand vorzugsweise wenigstens 3 %, bevorzugt wenigstens 5 % und insbesondere wenigstens 7 % der Länge des Trailerabschnittes beträgt, der nicht über der Zugmaschine Z angeordnet ist. Empfohlenermaßen beträgt dieser Abstand zu der Zugmaschine Z maximal 30 %, insbesondere maximal 25 % und bevorzugt maximal 20 % der Länge des Trailerabschnittes, der nicht über der Zugmaschine Z angeordnet ist.

Zweckmäßigerweise erstreckt sich das Luftleitelement 3 bzw. die Plane nicht über die gesamte Breite des Trailers 2 bzw. nicht über die gesamte Breite des Unterbodens 4 des Trailers 2. Vorzugsweise erstreckt sich das Luftleitelement 3 bzw. die Plane über zumindest 25 % und insbesondere über zumindest 30 % der Breite des Trailers 2 bzw. der Breite des Unterbodens 4 des Trailers 2. Die Breite wird dabei quer bzw. senkrecht zur Fahrtrichtung bzw. zur Längsrichtung des Trailers 2 gemessen. Weiterhin liegt es im Rahmen der Erfindung, dass sich das Luftleitelement 3 über maximal 85 %, insbesondere über maximal 80 % der Breite des Trailers 2 bzw. der Breite des Unterbodens 4 des Trailers 2 erstreckt.

Gemäß besonders bevorzugter Ausführungsform der Erfindung und im Ausführungsbeispiel ist eine Spannvorrichtung 6 zur Einstellung der Verspannung des Luftleitelementes 3 bzw. zur Einstellung der Spannkraft des Luftleitelementes 3 bzw. der Plane vorhanden. Vorzugsweise und im Ausführungsbeispiel ist diese Spannvorrichtung 6 am in Fahrtrichtung vorderen Längsende des Luftleitelementes 3 bzw. der Plane angeordnet. Zweckmäßigerweise und im Ausführungsbeispiel hält die Spannvorrichtung 6 dabei im angeschlossenen Zustand des Trailers 2 an die Zugmaschine Z einen Abstand zu der Zugmaschine Z des Trailers 2 ein.

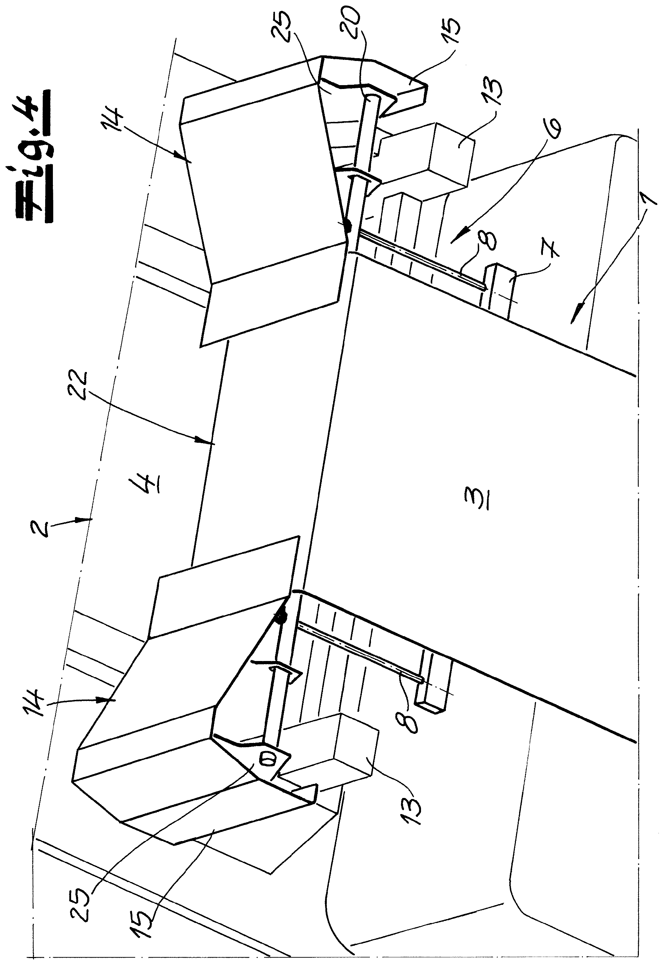

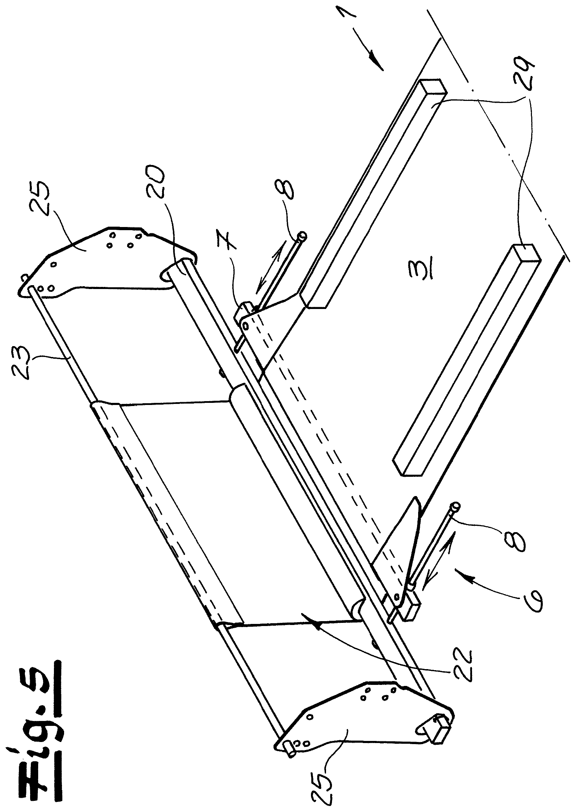

Es liegt im Rahmen der Erfindung, dass die Spannvorrichtung 6 zumindest ein Spannelement aufweist, das in Fahrtrichtung bzw. entgegen der Fahrtrichtung zur Einstellung der Verspannung bzw. der Spannkraft verschoben wird. Die bevorzugt im Rahmen der Erfindung eingesetzte Spannvorrichtung 6 wird insbesondere in den Figuren 4 und 5 dargestellt. Empfohlenermaßen und im Ausführungsbeispiel weist die Spannvorrichtung 6 eine Spannstange 7 auf, die sich über die Breite des Luftleitelementes 3 bzw. der Plane erstreckt. Zweckmäßigerweise und im Ausführungsbeispiel ist das Luftleitelement 3 bzw. die Plane an einer sich quer zur Fahrtrichtung bzw. sich quer zur Längsrichtung des Unterbodens 4 erstreckenden Spannstange 7 fixiert. Vorzugsweise und im Ausführungsbeispiel ist die Verspannung bzw. die Spannkraft durch Verschiebung der Spannstange 7 in Fahrtrichtung bzw. entgegen der Fahrtrichtung einstellbar. Die Spannstange 7 wird dabei translatorisch in Fahrtrichtung bzw. entgegen der Fahrtrichtung verschoben bzw. bewegt, um die Verspannung bzw. die Spannkraft einzustellen. Bewährtermaßen und im Ausführungsbeispiel ist das sich in Fahrtrichtung erstreckende Luftleitelement 3 bzw. die Plane an dem vorderen Längsende zunächst an einer Spannstange 7 fixiert und erstreckt sich anschließend weiter in Fahrtrichtung unter einer Umlenkstange 20, wobei das Luftleitelement 3 an dieser Umlenkstange 20 nach oben hin bzw. zum Unterboden 4 hin umgelenkt wird. Zweckmäßigerweise und im Ausführungsbeispiel ist der umgelenkte Abschnitt 22 des Luftleitelementes 3 quer bzw. senkrecht zur Fahrtrichtung positioniert. Vorzugsweise und im Ausführungsbeispiel ist das Ende des umgelenkten Abschnittes 22 an einer am Trailer 2 fixierten Fixierungsstange 23 befestigt. Somit umfasst die Spannvorrichtung 6 bevorzugt und im Ausführungsbeispiel zumindest drei Stangen, nämlich die Spannstange 7, die Umlenkstange 20 und die Fixierungsstange 23.

Nach besonders empfohlener Ausführungsform der Erfindung und im Ausführungsbeispiel ist zur Einstellung der Verspannung bzw. der Spannkraft die Spannstange 7 relativ zur Umlenkstange 20 in Fahrtrichtung bzw. entgegen der Fahrtrichtung verschiebbar. Zweckmäßigerweise ist die Spannstange 7 parallel zu der Umlenkstange 20 positioniert. Bewährtermaßen und im Ausführungsbeispiel wird die Verspannung bzw. die Spannkraft mittels zumindest einer Gewindespindel 8 eingestellt. Empfohlenermaßen und im Ausführungsbeispiel werden hierzu zwei Gewindespindeln 8 bzw. zwei parallel zueinander orientierte Gewindespindeln 8 eingesetzt. Diese Gewindespindeln 8 sind bevorzugt und im Ausführungsbeispiel an der Spannstange 7 angeschlossen und durchgreifen die Umlenkstange 20. Zweckmäßigerweise und im Ausführungsbeispiel greift dabei jede Gewindespindel 8 mit einem Außengewinde in ein Innengewinde der Umlenkstange 20 ein. Durch Betätigung der Gewindespindeln 8 kann die Spannstange 7 relativ zu der Umlenkstange 20 in Fahrtrichtung bzw. entgegen der Fahrtrichtung verschoben werden. Durch diese Betätigung kann die Verspannung bzw. die Spannkraft bezüglich des Luftleitelementes 3 bzw. der Plane eingestellt werden.

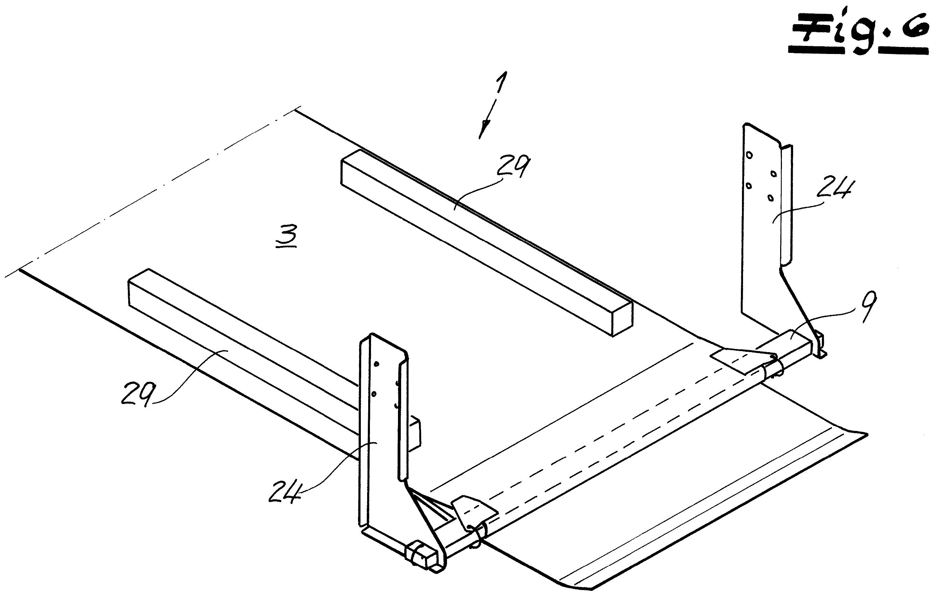

In der Fig. 6 ist erkennbar, dass das hintere Längsende des Luftleitelementes 3 bzw. der Plane an einer sich quer zur Fahrtrichtung bzw. sich quer zur Längsrichtung des Unterbodens 4 erstreckenden Gegen-Spannstange 9 fixiert ist. Vorzugsweise und im Ausführungsbeispiel ist diese Gegen-Spannstange 9 im Heckbereich des Trailers 2 mit Hilfe von Halteprofilen 24 fixiert. Bewährtermaßen und im Ausführungsbeispiel ist die Gegen-Spannstange 9 als passives Spannelement ausgebildet und bildet bezüglich der Verspannung lediglich ein Widerlager im Heckbereich des Trailers 2. Die Gegen-Spannstange 9 ist bevorzugt und im Ausführungsbeispiel lediglich in die Halteprofile 24 eingehängt.

Insbesondere in den Figuren 4 und 5 ist erkennbar, dass die Umlenkstange 20 am vorderen Längsende des Luftleitelementes 3 an zwei gegenüberliegende Befestigungsprofile 25 angeschlossen ist, wobei die Befestigungsprofile 25 bevorzugt und im Ausführungsbeispiel zur Fixierung an den Stützen 13 des Trailers 2 vorgesehen sind. Die Stützen 13 bzw. die Befestigungsprofile 25 sind empfohlenermaßen und im Ausführungsbeispiel jeweils mit einer Luftleitschale 14 verkleidet, wobei die Luftleitschale 14 die Stützen 13 bzw. die Befestigungsprofile 25 jeweils zur Fahrzeugvorderseite V hin abdeckt. Bewährtermaßen und im Ausführungsbeispiel weist jede der beiden Luftleitschalen 14 zwei an den abdeckenden Bereich der Luftleitschale 14 angeschlossene, zur Fahrzeughinterseite H hin abgebogene Schalenluftleitflügel 15 auf. Eine solche Luftleitschale 14 dient der besseren Luftströmungsführung um scharfe Kanten des Fahrzeuges bzw. des Trailers 2 im Unterbodenbereich.

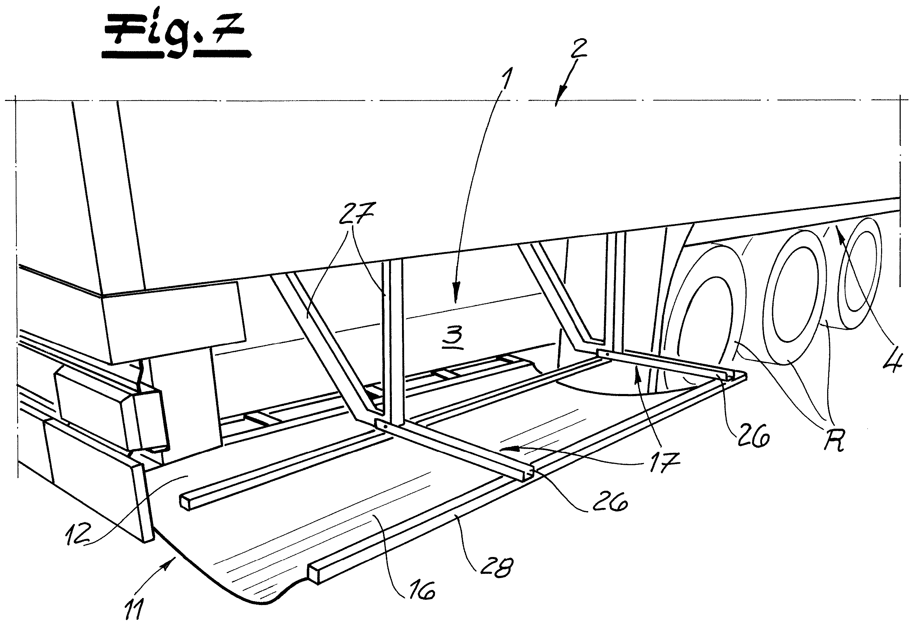

Den Figuren 1, 3 und 7 entnimmt man, dass nach besonders empfohlener Ausführungsform zwei gegenüberliegende Quer-Leitelemente 11 im hinteren Bereich des Trailers 2 vorgesehen sind. Bewährtermaßen und im Ausführungsbeispiel weist jedes Quer-Leitelement 11 einen ersten Elementabschnitt 12 auf, der einen Bereich des Unterbodens 4 neben dem flächigen Luftleitelement 3 von unten her abdeckt. Fernerhin weist jedes Quer-Leitelement bevorzugt und im Ausführungsbeispiel einen quer zu dem ersten Elementabschnitt 12 angeordneten zweiten Elementabschnitt 16 auf, der jeweils einen Seitenbereich des Fahrzeuges bzw. des Trailers 2 abdeckt. Zweckmäßigerweise ist das Quer-Leitelement an dem Luftleitelement 3 fixiert, und zwar empfohlenermaßen und im Ausführungsbeispiel mit seinem ersten Elementabschnitt 12 an dem Luftleitelement 3 fixiert. Bevorzugt und im Ausführungsbeispiel ist ein Quer-Leitelement 11 als flexible Plane bzw. als flexible Folie ausgebildet. Zweckmäßigerweise besteht das Quer-Leitelement 11 aus dem gleichen Material bzw. im Wesentlichen aus dem gleichen Material wie das Luftleitelement 3. Es empfiehlt sich, dass das Quer-Leitelement 11 einstückig aus dem ersten Elementabschnitt 12 und dem daran angeschlossenen zweiten Elementabschnitt 16 zusammengesetzt ist.

Eine ganz besonders bevorzugte Ausführungsform ist dadurch gekennzeichnet, dass - wie im Ausführungsbeispiel - der zweite Elementabschnitt 16 von dem Seitenbereich des Trailers 2 abklappbar ist und dass dieser zweite Elementabschnitt 16 auch wieder an den Seitenbereich des Trailers 2 anklappbar ist. Vorzugsweise und im Ausführungsbeispiel ist dazu eine Klappvorrichtung 17 vorgesehen und durch das Anklappen des zweiten Elementabschnittes 16 an den Seitenbereich des Trailers 2 wird bevorzugt das Quer-Leitelement gespannt bzw. verspannt. Bewährtermaßen und im Ausführungsbeispiel weist die Klappvorrichtung zwei Klappstützen 26 auf, die zweckmäßigerweise und im Ausführungsbeispiel parallel zueinander angeordnet sind. An den Klappstützen 26 ist bevorzugt und im Ausführungsbeispiel der zweite Elementabschnitt 16 fixiert und somit kann der zweite Elementabschnitt 16 des Quer-Leitelementes 11 mit Hilfe der Klappstützen 26 der Klappvorrichtung 17 an den Seitenbereich des Trailers 2 angeklappt werden. Es liegt im Rahmen der Erfindung, dass im Ausführungsbeispiel zwei V-förmige Halter 27 vorhanden sind, an die die Klappstützen 26 der Klappvorrichtung 17 anklappbar sind. Vorzugsweise und im Ausführungsbeispiel weist die Klappvorrichtung 17 bzw. weisen die Klappstützen 26 zumindest ein Rastelement auf, und mit Hilfe dieses Rastelementes ist der zweite Elementabschnitt 16 an dem Seitenbereich des Trailers 2 fixierbar. Das Rastelement ist in den Figuren nicht näher dargestellt. Es liegt im Rahmen der Erfindung, dass an dem Ende des zweiten Elementabschnittes 16 eine entlang dieses Endes verlaufende Stabilisierungsstange 28 vorgesehen ist, die bevorzugt und im Ausführungsbeispiel senkrecht zu den Klappstützen 26 verläuft.

In den Figuren ist angedeutet worden, dass zwischen dem Luftleitelement 3 und dem Unterboden 4 bzw. zwischen dem Quer-Leitelement 11 und dem Unterboden 4 Schutzkissen bzw. Schutzpolster 29 angeordnet sein können, die zweckmäßigerweise den Abstand des Luftleitelementes 3 bzw. den Abstand des Quer-Leitelementes 11 zu scharfkantigen Teilen des Trailers 2 sicherstellen.

In der Fig. 3 ist gezeigt, dass bevorzugt und im Ausführungsbeispiel das Luftleitelement 3 bzw. die Plane durch sich quer zur Längsrichtung des Luftleitelementes 3 bzw. des Trailers 2 erstreckende Unterstützungsstreben 10 verstärkt wird. Empfohlenermaßen und im Ausführungsbeispiel sind die Unterstützungsstreben 10 senkrecht zur Längserstreckung bzw. Längsrichtung des Luftleitelementes 3 bzw. der Plane orientiert. Zweckmäßigerweise und im Ausführungsbeispiel sind die Unterstützungsstreben 10 gebogen bzw. gewölbt ausgebildet, und zwar im Ausführungsbeispiel zum Unterboden hin gewölbt ausgebildet. Bei den Unterstützungsstreben 10 mag es sich um Kunststoffformteile handeln, die weniger flexibel bzw. deutlich weniger flexibel sind als das Luftleitelement 3 bzw. die Plane. Die Unterstützungsstreben 10 unterstützen jeweils die lokale Form des Luftleitelementes 3 bzw. der Plane.

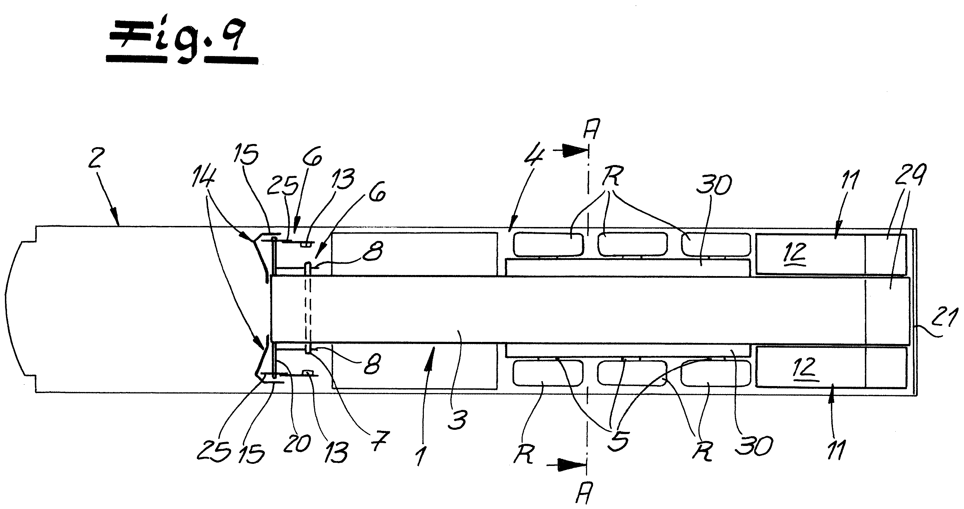

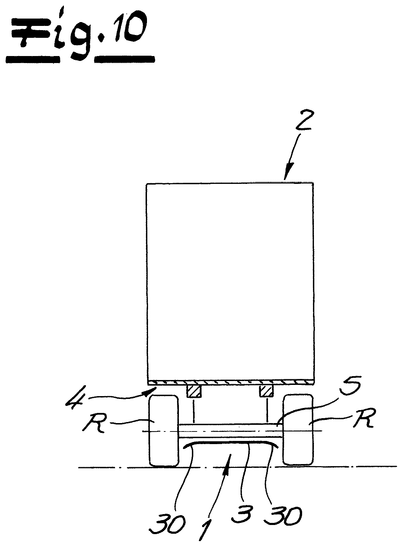

In den Fig. 9 und 10 ist eine bevorzugte Ausführungsform einer erfindungsgemäßen Luftleitvorrichtung 1 dargestellt. Diese Ausführungsform zeichnet sich dadurch aus, dass im Bereich der Fahrzeugachsen 5 des Trailers 2 an jeder Seite des Luftleitelementes 3 ein Seiten-Leitelement 30 angeschlossen ist, das den Abstand zwischen dem Luftleitelement 3 und den Rädern R des Trailers 2 überbrückt. Dabei kragen bevorzugt und im Ausführungsbeispiel die Seiten-Leitelemente 30 über die Breitenerstreckung des Luftleitelementes 3 seitlich vor. Zweckmäßigerweise bestehen die Seiten-Leitelemente 30 aus dem gleichen Material wie das Luftleitelement 3 und bevorzugt aus einer flexiblen Plane. Gemäß einer empfohlenen Ausführungsvariante sind die Seiten-Leitelemente 30 an das Luftleitelement 3 jeweils angeschweißt. Aus der Fig. 10 ist ersichtlich, dass nach einer bewährten Ausführungsvariante die Seiten-Luftleitelemente 30 zu den Rädern R hin nach unten bzw. zum Erdboden hin abgebogen ausgebildet sind. Es liegt im Übrigen im Rahmen der Erfindung, dass die Seiten-Leitelemente 30 versteift werden, beispielsweise durch Unterstützungsstreben 10 versteift werden.

## Patentansprüche

1. Kraftfahrzeug-Luftleitvorrichtung (1), insbesondere für einen Lastkraftwagen, vorzugsweise für einen Trailer (2) eines Lastkraftwagens, - mit zumindest einem flexiblen flächigen Kraftfahrzeug-Luftleitelement (3), wobei das Luftleitelement (3) an dem Fahrzeug mit der Maßgabe anschließbar ist, dass es zumindest einen Teil der Fläche des Unterbodens (4) des Fahrzeuges abdeckt, insbesondere zumindest 10 %, zweckmäßigerweise zumindest 15 %, bevorzugt zumindest 20 %, sehr bevorzugt zumindest 30 % und besonders bevorzugt zumindest 40 % der Fläche des Unterbodens (4) flächig abdeckt, wobei sich das flächige Luftleitelement (3) über zumindest 40 %, vorzugsweise über zumindest 45 % der Länge des Unterbodens (4) des Fahrzeuges, insbesondere des Trailers (2) erstreckt, wobei das flächige Luftleitelement (3) in Längsrichtung des Fahrzeuges, insbesondere des Trailers (2) verspannt bzw. gespannt ist und wobei die Verspannung bzw. die Spannkraft zur Verspannung des Luftleitelementes (3) einstellbar ist, wobei das flächige Luftleitelement (3) zumindest zwei Fahrzeugachsen (5) oder zumindest drei Fahrzeugachsen (5) von unten zumindest teilweise abdeckt und dabei auch den Abstandsraum zwischen den Fahrzeugachsen (5) bzw. zwischen den abgedeckten Abschnitten der Fahrzeugachsen (5) abdeckt,
wobei zumindest eine Spannvorrichtung (6) zur Einstellung der Verspannung des Luftleitelementes (3) bzw. zur Einstellung der Spannkraft vorhanden ist und an einem Längsende bzw. im Bereich eines Längsendes des flexiblen Luftleitelementes (3) angeordnet ist, wobei das Luftleitelement (3) an zumindest einer sich quer zur Fahrtrichtung bzw. quer zur Längsrichtung des Unterbodens (4) erstreckenden Spannstange (7) fixiert ist und wobei die Verspannung bzw. die Spannkraft durch translatorische Verschiebung der Spannstange (7) in Fahrtrichtung bzw. entgegen der Fahrtrichtung einstellbar ist,
und wobei ein Längsende des Luftleitelementes (3) an einer sich quer zur Fahrtrichtung bzw. zur Längsrichtung des Unterbodens (4) erstreckenden Gegen-Spannstange (9) fixiert ist, wobei die Gegen-Spannstange (9) vorzugsweise als passives Spannelement ausgebildet ist und lediglich an dem Unterboden (4) des Fahrzeuges im Heckbereich des Fahrzeuges bzw. des Trailers (2) befestigt ist.

2. Luftleitvorrichtung nach Anspruch 1, wobei das flexible flächige Luftleitelement (3) als flexible Plane bzw. als flexible Folie ausgebildet ist.

3. Luftleitvorrichtung nach einem der Ansprüche 1 oder 2, wobei das flexible flächige Luftleitelement (3) ein einziges, durchgehendes, zwischenraumfreies, sich in Längsrichtung des Unterbodens (4) erstreckendes Luftleitelement (3) ist.

4. Luftleitvorrichtung nach einem der Ansprüche 1 bis 3, wobei die Verspannung bzw. die Spannkraft mittels zumindest einer Spindel bzw. Gewindespindel (8) einstellbar ist.

5. Luftleitvorrichtung nach einem der Ansprüche 1 bis 4, wobei die Spannvorrichtung (6) bzw. die Spannstange (7) in einem bezüglich der Fahrrichtung des Fahrzeuges bzw. des Trailers vorderen Bereich des Luftleitelementes (3) an dem Luftleitelement (3) angeordnet ist.

6. Luftleitvorrichtung nach einem der Ansprüche 1 bis 5, wobei das flächige Luftleitelement (3) zumindest 30 %, vorzugsweise zumindest 35 % und bevorzugt zumindest 40 % der Länge I mehrerer Fahrzeugachsen (5) jeweils abdeckt.

7. Luftleitvorrichtung nach einem der Ansprüche 1 bis 6, wobei zumindest ein - vorzugsweise an dem Luftleitelement (3) fixiertes - Quer-Leitelement (11) vorgesehen ist, das mit einem ersten Elementabschnitt (12) einen Bereich des Unterbodens (4) neben dem flächigen Luftleitelement (3) von unten her abdeckt und das vorzugsweise mit einem quer zum ersten Elementabschnitt (12) angeordneten zweiten Elementabschnitt (16) einen Seitenbereich des Fahrzeuges bzw. des Trailers (2) abdeckt.

8. Luftleitvorrichtung nach Anspruch 7, wobei der zweite Elementabschnitt (16) mittels einer Klappvorrichtung an den Seitenbereich anklappbar und von dem Seitenbereich abklappbar ist und wobei vorzugsweise durch Anklappen des zweiten Elementabschnittes (16) an den Seitenbereich das Quer-Leitelement (11) spannbar ist.

9. Luftleitvorrichtung nach Anspruch 8, wobei die Klappvorrichtung (17) zumindest ein Rastelement aufweist und wobei im angeklappten Zustand des zweiten Elementabschnittes (16) der zweite Elementabschnitt (16) mit Hilfe des zumindest einen Rastelementes über eine Rastverbindung bzw. Schnappverbindung fixierbar ist.

10. Luftleitvorrichtung nach einem der Ansprüche 7 bis 9, wobei jeweils zumindest ein Quer-Leitelement (11) an gegenüberliegenden Seiten des Fahrzeuges angeordnet ist und wobei vorzugsweise zwei Quer-Leitelemente (11) in Bezug auf die Fahrtrichtung bzw. in Bezug auf die Längsrichtung des Unterbodens auf gleicher Länge unmittelbar gegenüber angeordnet sind.

11. Luftleitvorrichtung nach einem der Ansprüche 7 bis 10, wobei zumindest ein Quer-Leitelement (11) in Bezug auf die Fahrtrichtung des Fahrzeuges bzw. des Trailers (2) hinter der letzten Fahrzeugachse (5) angeordnet ist.

12. Kraftfahrzeug, insbesondere Lastkraftwagen, mit zumindest einer Luftleitvorrichtung (1) nach einem der Ansprüche 1 bis 11.

13. Kraftfahrzeug nach Anspruch 12, wobei die Luftleitvorrichtung (1) an dem Trailer (2) eines Lastkraftwagens befestigt ist.

## Claims

1. Motor vehicle air guiding device (1), in particular for a heavy goods vehicle, preferably for a trailer (2) of a heavy goods vehicle, having at least one flexible, flat motor vehicle air guiding element (3), wherein the air guiding element (3) can be connected to the vehicle with the proviso that it covers at least a part of the surface of the underbody (4) of the vehicle, in particular that it covers a flat area of at least 10 %, expediently at least 15 %, preferably at least 20 %, very preferably at least 30 % and particularly preferably at least 40 % of the surface of the underbody (4), wherein the flat air guiding element (3) extends across at least 40 %, preferably over at least 45 % of the length of the underbody (4) of the vehicle, in particular of the trailer (2), wherein the flat air guiding element (3) is stretched or tensioned in the longitudinal direction of the vehicle, in particular of the trailer (2) and wherein the stretching, or the tensioning required for the stretching, of the air guiding element (3) is adjustable, wherein the flat air guiding element (3) at least partially covers at least two vehicle axles (5) or at least three vehicle axles (5) from below and also covers the space between the vehicle axles (5) or between the covered portions of the vehicle axles (5),
wherein at least one tensioning device (6) for adjusting the stretching of the air guiding element (3), or for adjusting the tension, is present and is arranged at a longitudinal end or in the region of a longitudinal end of the flexible air guiding element (3), wherein the air guiding element (3) is fixed to at least one tensioning rod (7) extending transversely to the direction of travel or transversely to the longitudinal direction of the underbody (4) and wherein the stretching or the tension can be adjusted by translational displacement of the tensioning rod (7) in the direction of travel or against the direction of travel,
and wherein a longitudinal end of the air guiding element (3) is fixed to a counter-tensioning rod (9) extending transversely to the direction of travel or to the longitudinal direction of the underbody (4), wherein the counter-tensioning rod (9) is preferably designed as a passive tensioning element and is only attached to the underbody (4) of the vehicle in the rear area of the vehicle or the trailer (2).

2. Air guiding device according to claim 1, wherein the flexible, flat air guiding element (3) is designed as a flexible tarpaulin or as a flexible foil.

3. Air guiding device according to any one of claims 1 or 2, wherein the flexible, flat air guiding element (3) is a single, continuous air guiding element (3) without gaps, which extends in the longitudinal direction of the underbody (4).

4. Air guiding device according to any one of claims 1 to 3, wherein the stretching or the tension is adjustable by means of at least one spindle or threaded spindle (8) .

5. Air guiding device according to any one of claims 1 to 4, wherein the tensioning device (6) or the tensioning rod (7) is arranged on the air guiding element (3) in a front region of the air guiding element (3) relative to the direction of travel of the vehicle or the trailer.

6. Air guiding device according to any one of claims 1 to 5, wherein the flat air guiding element (3) respectively covers at least 30 %, preferably at least 35 % and preferably at least 40 % of the length 1 of multiple vehicle axles (5).

7. Air guiding device according to any one of claims 1 to 6, wherein at least one transverse guiding element (11) - preferably fixed to the air guiding element (3) - is provided, which covers a region of the underbody (4) next to the flat air guiding element (3) from below with a first element portion (12) and which preferably covers a side region of the vehicle or the trailer (2) with a second element portion (16) arranged transverse to the first element portion (12).

8. Air guiding device according to claim 7, wherein the second element portion (16) can be folded toward the side region or away from the side region by means of a folding device and wherein the transverse guide element (11) preferably can be tensioned by folding the second element portion (16) toward the side region.

9. Air guiding device according to claim 8, wherein the folding device (17) has at least one locking element and wherein, when the second element portion (16) is in its folded state, said second element portion (16) can be fixed in position by means of the at least one locking element via a locking connection or snap connection.

10. Air guiding device according to any one of claims 7 to 9, wherein at least one transverse guide element (11) each is arranged on opposite sides of the vehicle and wherein preferably two transverse guide elements (11) are arranged directly opposite in the same respective positions relative to the direction of travel or relative to the longitudinal direction of the underbody.

11. Air guiding device according to any one of claims 7 to 10, wherein at least one transverse guide element (11) is arranged behind the last vehicle axle (5) relative to the direction of travel of the vehicle or the trailer (2) .

12. Motor vehicle, in particular heavy goods vehicle, with at least one air guiding device (1) according to any one of claims 1 to 11.

13. Motor vehicle according to claim 12, wherein the air guiding device (1) is attached to the trailer (2) of a heavy goods vehicle.

## Revendications

1. Dispositif déflecteur d'air (1) destiné à un véhicule automobile, notamment à un véhicule poids lourd, de préférence à une remorque (2) d'un véhicule poids lourds, - pourvu d'au moins un élément déflecteur d'air (3) de véhicule automobile souple plan, l'élément déflecteur d'air (3) pouvant être raccordé sur le véhicule à condition de recouvrir de manière plane au moins une partie de la surface du bas de caisse (4) du véhicule, notamment au moins 10 %, opportunément au moins 15 %, de préférence au moins 20 %, de manière très préférentielle, au moins 30 % et de manière particulièrement préférentielle, au moins 40 % de la surface du bas de caisse (4), l'élément déflecteur d'air (3) plan s'étendant sur au moins 40 %, de préférence sur au moins 45 % de la longueur du bas de caisse (4) du véhicule, notamment de la remorque (2), l'élément déflecteur d'air (3) plan étant tendu ou serré dans la direction longitudinale du véhicule, notamment de la remorque (2) et la tension ou la force de serrage pour tendre l'élément déflecteur d'air (3) étant réglable, l'élément déflecteur d'air (3) plan recouvrant au moins partiellement par le bas au moins deux essieux du véhicule (5) ou au moins trois essieux du véhicule (5) et à cet effet, recouvrant également l'espace d'écartement entre les essieux du véhicule (5) ou entre les segments recouverts des essieux du véhicule (5),
au moins un dispositif tenseur (6) destiné à régler la tension de l'élément déflecteur d'air (3) ou à régler la force de serrage étant présent et étant placé sur une extrémité longitudinale ou dans la région d'une extrémité longitudinale de l'élément déflecteur d'air (3) souple, l'élément déflecteur d'air (3) étant fixé sur au moins une barre de tension (7) s'étendant à la transversale du sens de déplacement ou à la transversale de la direction longitudinale du bas de caisse (4) et la tension ou la force de serrage étant réglable par déplacement en translation de la barre de tension (7) dans le sens de déplacement ou à l'encontre du sens de déplacement,
et une extrémité longitudinale de l'élément déflecteur d'air (3) étant fixée sur une barre de tension antagoniste (9) s'étendant à la transversale du sens de déplacement ou de la direction longitudinale du bas de caisse (4), la barre de tension antagoniste (9) étant conçue de préférence sous la forme d'un élément tenseur passif et étant fixée uniquement sur le bas de caisse (4) du véhicule dans la partie arrière du véhicule ou de la remorque (2).

2. Dispositif déflecteur d'air selon la revendication 1, l'élément déflecteur d'air (3) souple plan étant conçu sous la forme d'une bâche souple ou d'un film souple.

3. Dispositif déflecteur d'air selon l'une quelconque des revendications 1 ou 2, l'élément déflecteur d'air (3) souple plan étant un unique élément déflecteur d'air (3) continu, exempt d'interstices, s'étendant dans la direction longitudinale du bas de caisse (4).

4. Dispositif déflecteur d'air selon l'une quelconque des revendications 1 à 3, la tension ou la force de serrage étant réglable au moyen d'au moins une broche ou d'une broche filetée (8).

5. Dispositif déflecteur d'air selon l'une quelconque des revendications 1 à 4, le dispositif tenseur (6) ou la barre de tension (7) étant placé(e) sur l'élément déflecteur d'air (3) dans une région avant de l'élément déflecteur d'air (3) par rapport au sens de déplacement du véhicule ou de la remorque.

6. Dispositif déflecteur d'air selon l'une quelconque des revendications 1 à 5, l'élément déflecteur d'air (3) plan recouvrant respectivement au moins 30 %, de préférence au moins 35 % et de manière préférentielle, au moins 40 % de la longueur 1 de plusieurs essieux du véhicule (5).

7. Dispositif déflecteur d'air selon l'une quelconque des revendications 1 à 6, au moins un élément déflecteur transversal (11) (fixé de préférence sur l'élément déflecteur d'air (3) étant prévu, qui recouvre à partir du bas par un premier segment d'élément (12) une partie du bas de caisse (4) à côté de l'élément déflecteur d'air (3) plan et qui recouvre de préférence par un deuxième segment d'élément (16) placé à la transversale du premier segment d'élément (12) une partie latérale du véhicule ou de la remorque (2) .

8. Dispositif déflecteur d'air selon la revendication 7, le deuxième segment d'élément (16) étant susceptible d'être rabattu au moyen d'un dispositif rabattable contre la partie latérale et de préférence par rabattage du deuxième segment d'élément (16) sur la partie latérale, l'élément déflecteur transversal (11) pouvant être tendu.

9. Dispositif déflecteur d'air selon la revendication 8, le dispositif rabattable (17) comportant au moins un élément d'enclenchement et dans la position rabattue du deuxième segment d'élément (16), le deuxième segment d'élément (16) pouvant être fixé à l'aide de l'au moins un élément d'enclenchement, par un assemblage par encliquetage ou par un assemblage par enclenchement.

10. Dispositif déflecteur d'air selon l'une quelconque des revendications 7 à 9, chaque fois au moins un élément déflecteur transversal (11) étant placé sur des côtés opposés du véhicule et de préférence deux éléments déflecteurs transversaux (11) étant placés directement à l'opposée à même longueur en rapport au sens de déplacement ou en rapport à la direction longitudinale du bas de caisse.

11. Dispositif déflecteur d'air selon l'une quelconque des revendications 7 à 10, au moins un élément déflecteur transversal (11) étant placé derrière le dernier essieu de véhicule (5), en rapport au sens de déplacement du véhicule ou de la remorque (2).

12. Véhicule automobile, notamment véhicule poids lourd, pourvu d'au moins un dispositif déflecteur d'air (1) selon l'une quelconque des revendications 1 à 11.

13. Véhicule automobile selon la revendication 12, le dispositif déflecteur d'air (1) étant fixé sur une remorque (2) d'un véhicule poids lourd.
